# EUROPÄISCHE PATENTANMELDUNG

(11) **EP 4 664 852 A1**
(43) Veröffentlichungstag der Anmeldung: **17.12.2025**
(21) Anmeldenummer: 24181193.4
(22) Anmeldetag: 10.06.2024
(51) Int. Cl.: H04L 47/283, H04L 47/56, H04L 47/2416

(54) **COMPUTER-IMPLEMENTIERTES VERFAHREN UND VORRICHTUNG ZUR KONTROLLE EINES EINSPEISENS VON DATENPAKETEN EINES DATENSTROMS AUS EINER MENGE VON DATENSTRÖMEN ÜBER EIN ÜBERTRAGUNGSNETZWERK**

(71) Anmelder: Siemens Aktiengesellschaft, 80333 München (DE)
(72) Erfinder: Majewski, Kurt, 81541 München (DE); Scheiterer, Ruxandra, 82538 Geretsried (DE); Ferreira Coelho, Rodrigo, 91080 Uttenreuth (DE); Obradovic, Dragan, 85521 Ottobrunn (DE)
(74) Vertreter: Siemens Patent Attorneys

(57) **Zusammenfassung**

Das erfindungsgemäße computerimplementiertes Verfahren kontrolliert das Einspeisen von Datenpaketen eines Datenstroms s einer Menge S von Datenströmen in ein Übertragungsnetzwerk (10), wobei die Sendeknoten einer Synchronisationsgruppe G(n) zugeordnet werden und die Sendeknoten derselben Synchronisationsgruppe ihre Einspeisezyklen periodisch mit einer Periode T(g) synchronisieren, und kontrolliert, ob alle Datenpakete der Menge der Datenströme unter Einhaltung ihrer jeweiligen Latenzzeit L(s) von ihren Sendeknoten in das Übertragungsnetz eingespeist werden können: 1. Bildung initialer Durchlaufszeiten indem für jeden Strom s in S theta(s):= 0 oder einen anderen initialen Wert gesetzt wird; 2. Berechnung der Durchlaufszeiten Theta(s) für jeden Strom s in S aus den Durchlaufzeitwerten theta(s); 3. Wenn einer der Werte Theta(s) > L(s) erfüllt, so wird das Verfahren mit "ablehnen" beendet; 4. Wenn Theta(s) <= theta(s) für alle s in S erfüllt ist, so wird das Verfahren mit "akzeptieren" beendet; 5. Wenn keines der Kriterien in 3. und 4. erfüllt ist, wird theta(s) für s in S durch den Wert Theta(s) ersetzt und es wird mit 2. fortgefahren.

## Beschreibung

Die Erfindung betrifft ein computer-implementiertes Verfahren und eine elektronische Recheneinrichtung zur Kontrolle eines Einspeisens von Datenpaketen eines Datenstroms aus einer Menge von Datenströmen (englisch Streams) in ein Übertragungsnetzwerk sowie ein zugehöriges Computerprogramm(-produkt).

Ein Übertragungsnetzwerk weist mehrere Knoten n sowie ein oder mehrere Übertragungsstrecken v auf. Übertragungsstrecken verbinden einen Eingangsnoten in(v) mit einem Ausgangsknoten out(v) und erlauben es, Daten von Knoten in(v) zum Knoten out(v) des Netzwerks zu übertragen. Durch eine Hintereinanderausführung solcher Übertragungen können Daten auch zwischen Knoten des Netzwerks ausgetauscht werden, die nicht durch eine direkte Übertragungsstrecke verbunden sind.

Die Kommunikation im Netzwerk wird in Form von Datenströmen (englisch Streams) s organisiert. Ein Datenstrom s ist eine periodische ablaufende Übertragung von Datenpaketen von einem Sendeknoten SN(s) zu einem Empfangsknoten TN(S) unter Verwendung einer vorgegebenen Menge von Übertragungsstrecken (Pfad).

Das Einspeisen bzw. Entsenden von Datenpaketen an einem Sendeknoten im vorliegenden Kontext ist in Einspeisezyklen unterteilt. Die Kommunikationsplanung benötigt für die Entscheidung über die Annahme oder Ablehnung eines neuen zu entsendenden Datenstroms die Bestimmung von oberen Schranken für die größtmögliche Übertragungszeit der Datenpakete des Datenstroms vom Sende- zum Empfangsknoten. Diese Übertragungszeit kann durch Interferenzen von anderen Datenströmen, den sogenannten Störern (Interferer), deutlich größer werden, als die rein physikalische Übertragungszeit. Zum Beispiel, wenn eine Übertragungstrecke im Pfad eines Stroms durch die Übertragung eines anderen Datenpakets behindert wird.

Beispielsweise erfordert industrielle Kommunikation wie z.B. In-Car Ethernet, Pro-Audio-Video und andere Kommunikationen in der Regel die Begrenzung der Übertragungszeit bzw. Durchlaufzeit (Latenzzeit, d.h. Zeitintervall zwischen Sendezeitpunkt am Sendeknoten und Empfangszeitpunkt am Empfangsknoten) und Anforderungen bezüglich Verlustfreiheit im Übertragungsnetzwerk.

So ist vorteilhaft, wenn die Bestimmung der Schranken für die größtmöglichen Übertragungszeit folgende Eigenschaften aufweist:
i) Korrektheit: Datenpakete dürfen im tatsächlichen Betrieb nicht Übertragungszeiten aufweisen, die höher als die Schranken sind,
ii) Schärfe: Es sollen möglichst viele Datenströme unter Einhaltung der unter i) genannten Maximalwerte der Schranken akzeptiert werden können, und
iii) Aufwand: Die Ermittlung der Maximalwerte soll nicht allzu rechenaufwändig sein.

Folgende Verfahren sind möglich oder bekannt:
Mit Simulationen kann ein konkreter Ablauf der Datentransfers im Übertragungsnetzwerk virtuell nachgebildet werden und dabei können Durchlaufzeiten und Pufferfüllstände beobachtet werden. Diese Beobachtungen können zur Entscheidung ob die Qualitätsanforderungen einer gegebenen Menge von Datenströmen im tatsächlichen Netzwerk erfüllbar ist herangezogen werden. Obwohl detailgenaue Simulationen stark hinsichtlich Punkt ii) im Vergleich zu anderen Verfahren sein können, sind sie, alles in allem, wenig geeignet im Betrieb des Netzwerks als Grundlage für die Entscheidung ob Datenströme hinzugenommen werden können, zu dienen, denn Punkt i) oder iii) können nicht hinreichend erfüllt werden: Kurze grobe Simulationen laufen unter Umständen schnell genug, liefern aber keine verlässlichen Maximalwerte, während lange detaillierte Simulationen teilweise verlässliche Maximalwerte ergeben, aber einen nicht praktikablen Aufwand bedeuten. Beispiele für Simulationstools sind unter https://omnetpp.org/ und https://www.nsnam.org/ zu finden.

Aus Qing Li and Dong Li and Xi Jin and Qizhao Wang and Peng Zeng, "A Simple and Efficient Time-Sensitive Networking Traffic Scheduling Method for Industrial Scenarios", Electronics 12(9)1-19, 2020, https://doi.org/10.3390/electronics9122131 ist ein Ansatz bekannt, Sendezeitpunkten der Datenpakete an den Sendeknoten so zu bestimmen, dass es auf der Strecke zum Zielknoten zu fast keinem Treffen mit weiteren Paketen kommt. Wenn solche Sendezeitpunkte für die Pakete einer gegebenen Menge von Datenströmen existieren, so ist insbesondere sichergestellt, dass das Datennetzwerk beinahe kleinstmögliche Durchlaufzeiten und Pufferfüllstände im Betrieb realisiert, d.h. eine solche Lösung würde Punkt i) erfüllen. Allerdings bestehen Defizite bezüglich ii): Wenn Staus weitgehend ausgeschlossen werden sollen, reichen schon relativ wenige Ströme, dass erwünschte Durchlaufzeit und Füllstände nicht mehr eingehalten werden können. Außerdem führen sie oft zu Problemen bezüglich iii).

In EP23214704.1 ist bereits ein Verfahren vorgeschlagen worden, das entscheidet, ob der potenziell zu sendende Datenstrom über den Zwischenknoten gesendet wird in Abhängigkeit von einer vorgegebenen maximalen Übertragungszeit und der bestimmten Worst-Case-Übertragungszeit. Der Algorithmus akzeptiert den neuen Datenstrom in im Einspeisezyklus r nur dann, wenn nach seiner hypothetischen Einbeziehung in Zyklus r die Bedingungen (der Datenstrominformation) des neuen Datenstroms erfüllt sind und die Bedingungen aller zuvor akzeptierten Datenströme weiterhin erfüllt sind. Dieses Verfahren setzt voraus, dass alle Sendeknoten synchronisiert sind, und erlaubt nur eine Klasse von Datenströmen (keine Priorisierungen).

Es ist Aufgabe der vorliegenden Erfindung, ein computer-implementiertes Verfahren und eine Recheneinrichtung gegenüber dem oben genannten Stand der Technik zu schaffen, durch das ein verbesserter Betrieb des Übertragungsnetzwerks ermöglicht wird.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Die Erfindung bezieht sich auf ein computer-implementiertes Verfahren zur Kontrolle eines Einspeisens von Datenpaketen eines Datenstroms s aus einer Menge S von Datenströmen in ein Übertragungsnetzwerk, wobei das Übertragungsnetzwerk mehrere Knoten n sowie wenigstens eine Übertragungsstrecke v von einem Eingangsknoten in(v) zu einem Ausgansknoten out(v) umfasst, wobei jede Übertragungsstrecke gemeinsam von Datenströmen gemeinsam genutzt werden kann, wobei das Einspeisen von Datenpaketen an einem Sendeknoten in Einspeisezyklen unterteilt sind, die eine vorgegebene zeitliche Dauer Z(n) aufweisen, wobei die Sendeknoten einer Synchronisationsgruppe G(n) zugeordnet werden und die Sendeknoten derselben Synchronisationsgruppe ihre Einspeisezyklen periodisch mit einer Periode T(g) synchronisieren, wobei das Verfahren mit folgenden Schritten kontrolliert, ob alle Datenpakete der Menge der Datenströme unter Einhaltung ihrer jeweiligen Latenzzeit L(s) von ihren Sendeknoten in das Übertragungsnetz eingespeist/entsendet werden können:
a) Bilden initialer maximaler Durchlaufzeiten theta(s) eines Datenpakets von jedem Datenstrom s aus der Menge S der Datenströme im Übertragungsnetzwerk,
b) Ermitteln von neuen maximalen Durchlaufzeiten Theta(s) für jeden Datenstrom s in S aus den vorhergehenden maximalen Durchlaufzeiten theta(s), wobei Theta(s) aus der Summe einer oberen Schranke für die Summe fixer Dauern, die die Ankunft eines Datenpakets an einem Ausgangsknoten aufgrund physikalischer Eigenschaften der vom Datenpaket genutzten Übertragungsstrecke verzögern können, einer oberen Schranke für eine maximale Wartezeit eines Datenpakets des Datenstroms s durch Belegung einer oder mehrerer gemeinsam genutzter Übertragungsstrecken durch andere Datenpakete s', die an mit s synchronisierten Sendeknoten, eingespeist werden, und einer Summe oberer Schranken für jede maximale Wartezeit eines Datenpakets des Datenstroms s durch Belegung einer oder mehrerer gemeinsam genutzter Übertragungsstrecken durch andere Datenpakete s', die an Sendeknoten, die zu einer anderen Synchronisationsgruppe als die der mit s synchronisierte Sendeknoten zugeordnet werden, eingespeist werden, berechnet wird,
c) wenn einer der ermittelten Werte von Theta(s) die einzuhaltende Latenzzeit L(s) überschreitet, so wird das Verfahren mit dem Ergebnis "ablehnen" beendet,
d) wenn alle ermittelten Werte von Theta(s) den jeweils gebildeten vorigen maximalen Durchlaufzeiten theta(s) gleich sind oder diese unterschreiten, dann wird das Verfahren mit dem Ergebnis "akzeptieren" beendet,
e) ansonsten werden die Werte der maximalen Durchlaufzeiten theta(s) jeweils auf die Werte von Theta(s) gesetzt und beginnend mit obigen Schritt b) das Verfahren wiederholt.

Wenn das Verfahren im Schritt d) mit "akzeptieren" endet, können die Datenpakete der Menge der Datenströme unter Einhaltung ihrer erlaubten Latenzzeiten vom Übertragungsnetzwerk übertragen werden oder die einer besten von mehreren akzeptierten Varianten der Datenströme (z.B. andere Sendezyklen, andere Übertragungsstrecken bzw. -pfade, ...). Mit anderen Worten ausgedrückt, es müssen nicht die im Verfahren gefundenen Datenpakete der Menge der Datenströme übertragen werden. Es können als zulässige Alternative bzw. Variante die Datenpakete der "besten" Menge der Datenströme mit der geringeren Durchlaufzeiten gewählt bzw. akzeptiert werden. Wenn das Verfahren im Schritt c) mit "ablehnen" endet, kann das Einhalten der erlaubten Latenzzeiten vom Verfahren nicht sichergestellt werden. Folglich werden die Datenpakete der Menge der Datenströme nicht gemeinsam eingespeist bzw. deren Einspeisung verhindert. Dann könnte entweder ein anderes Verfahren herangezogen werden, oder geeignete Varianten der Datenströme betrachtet (z.B. andere Sendezyklen, andere Pfade, ...) werden.

Eine Weiterbildung der Erfindung sieht vor, dass die Datenströme einer Menge S jeweils unterschiedliche Prioritätsstufen aufweisen.

Eine Weiterbildung der Erfindung sieht vor, dass das Ermitteln von neuen Durchlaufzeiten Theta(s) für jeden Datenstrom s in S in der Reihenfolge der jeweiligen Prioritätsstufen der Datenströme durchgeführt wird.

Eine Weiterbildung der Erfindung sieht vor, dass für mindestens eine Teilmenge von Datenströmen aus S, deren Datenpakete in einem Puffer b aus einer Menge B von Puffern in den Knoten gespeichert werden können, eine obere Schranke U(b) für einen Füllstand des Puffers aus der Summe der für jede Synchronisationsgruppe maximalen Werte von über jede Phase eines Einspeisezyklus aufsummierten Paketlängen von Datenströmen aus der Teilmenge berechnet wird und die berechnete obere Schranke der Größe M(b) eines Puffers entspricht oder die Größe M(b) unterschreitet.

Eine Weiterbildung der Erfindung sieht vor, dass Datenpakete von Datenströmen, die eine Übertragungsstrecke v durchlaufen und eine Prioritätsstufe aufweisen, in einem für die Übertragungstrecke v und für die Prioritätsstufe dezidierten Puffer gespeichert werden.

Das Verfahren kontrolliert bzw. prüft, ob eine Menge von Datenströmen unter Einhaltung ihrer geforderten Latenzen und Verlustfreiheit akzeptiert werden kann. IEs werden neue Datenströme im Übertragungsnetzwerk nur dann akzeptiert, wenn eines der Verfahren die Überprüfung aller dann vorhandenen Datenströme positiv abschließt. Es wird sichergestellt, dass im Betrieb diese Anforderungen für alle akzeptierten Datenströme eingehalten werden.

Knoten des Übertragungsnetzwerkes können etwa Fertigungsmaschinen, (IoT-)Geräte, Terminal, PCs und ggf. Sensoren bzw. Aktoren sein. Bidirektionale Übertragungsstrecken können durch Paare von gegenläufigen Übertragungsstrecken dargestellt werden. Der Datenaustausch in den Übertragungsstrecken kann verdrahtet oder drahtlos mittels gängiger Funktechnik WLAN, Bluetooth, NFC, Mobilfunk etc. ausgeprägt sein kann.

Ein weiterer Aspekt der Erfindung ist eine elektronische Recheneinrichtung für ein Übertragungsnetzwerk, wobei die elektronische Recheneinrichtung zur Durchführung des oben erläuterten Verfahrens und seiner Weiterbildungen ausgebildet ist.

Die elektronische Recheneinrichtung kann mit einem Prozessor ausgestaltet sein, der das oben genannte computer-implementierte Verfahren ausführen kann.

Die Vorrichtung und das Computerprogramm(produkte) können entsprechend des oben beschriebenen Verfahrens bzw. der Weiterbildungen/Ausführungsformen des vorliegenden Verfahrens aus- bzw. weitergebildet sein.

Des Weiteren wird ein Computerprogramm(produkt) umfassend Programm-Code, der von mindestens einem Prozessor ausgeführt werden kann und der bewirkt, dass der mindestens einen Prozessor das erfindungsgemäße Betriebsverfahren und dessen Ausführungsformen ausführt. Das Computerprogramm kann auf einem Rechner z.B. in der Cloud, Server und/oder PC ablaufen oder als Computerprogrammprodukt auf einem computerlesbaren Medium gespeichert sein. Dabei bringt das Computerprogramm die Laufzeitumgebung zum Ablauf .

Zusätzlich kann eine Variante des Computerprogramm(produkte)s mit Programmbefehlen zur Konfiguration eines Erstellungsgeräts, beispielsweise ein 3D-Drucker, ein Computersystem oder eine zur Erstellung von Prozessoren und/oder Geräten geeignete Herstellungsmaschine sein.

Die Mittel können Hardware-, Firmware und/oder Softwareeinheiten bzw. -module sein.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" bzw. "computer-implementiert" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter Bereitstellen kann verstanden werden, dass die Applikation und/oder Fähigkeitspakete selbst den oben genannten Mitteln z.B. in Form einer Verarbeitungseinheit bzw. CPU bzw. einer Kontrolleinheit (Control Unit) bereitgestellt wird. Unter Bereitstellen kann ebenso verstanden werden, dass der Verarbeitungseinheit eine Operation bereitgestellt wird, wobei die Operation die bereitgestellte Applikation selbst sein kann und/oder die Fähigkeitspakete zur Steuerung und/oder Ausführung der Konfiguration verwendet.

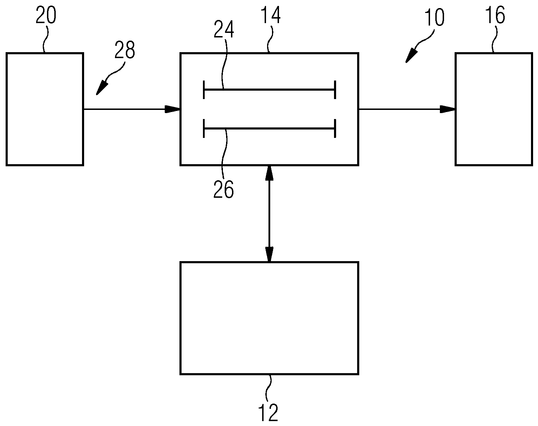

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigt:
Die Figur ein schematisches Blockschaltbild gemäß einer Ausführungsform eines (Übertragungs-)Netzwerks.

Es werden zunächst mathematische Begriffe und Variablen erläutert:
Das Übertragungsnetzwerk kann als ein Tupel (N,V), wobei N die Menge der Knoten und V die Menge der Übertragungsstrecken zwischen den Knoten darstellt. Zu jeder Übertragungsstrecke v in V gibt es einen Knoten in(v) in N, bei dem sie beginnt und einen Knoten out(v) in N, bei dem sie endet. Jede der Übertragungsstrecken v in V erlaubt es, Datenpakete vom Knoten in(v) zum Knoten out(v) zu schicken. Die betrachteten Übertragungsstrecken sind also unidirektional. Bidirektionale Übertragungsstreckenkönnen durch zwei gegenläufige unidirektionale Übertragungsstrecken dargestellt werden. Es sind kabelbasierte, aber auch kabellose Übertragungsstrecken möglich.

Jeder Knoten n in N bietet die Möglichkeit ein Datenpaket, das von einer im Knoten n endenden Übertragungsstrecke v in V (d.h. mit out(v) = n) ankommt über eine der im Knoten n beginnenden Übertragungsstrecke v' in V (d. h. mit in(v') = n) weiterzuleiten. Diese Funktionalität wird üblicherweise als "switching" oder "routing" bezeichnet.

Da die in den Datenpaketen enthaltenen Daten nur nacheinander durch eine Übertragungsstrecke geschickt werden können, aber unter Umständen mehrere einlaufende Datenpakete an einem Knoten um die Weiterleitung an einer ausgehenden Übertragungsstrecke konkurrieren, gibt es in den Knoten an den ausgehenden Übertragungsstrecken Datenpuffer zum Zwischenspeichern der Datenpakete, bis eine Weiterleitung möglich wird.

Knoten können als Start und Ziel eines Datentransfers dienen. Mit Hilfe einer oder mehrerer Übertragungen durch die Übertragungsstrecken und Knoten, kann ein Datenpaket von einem der Knoten des Netzes zu einem anderen Knoten, der über eine oder mehrere Übertragungsstrecken erreichbar ist, gelangen.

Knoten, an denen Einspeisungen von Datenpaketen stattfinden können, werden Eingangs- oder Sende- oder Startknoten genannt. Die Einspeisungen an einem Startknoten werden in Einspeisezyklen organisiert. Die Dauer des Einspeisezyklus von Startknoten n wird mit Z(n) bezeichnet. Die Einspeisungen erfolgen zu Beginn eines Einspeisezyklus des Startknotens.

Erfindungsgemäß wird eine teilweise synchronisierte Einspeisung der Datenpakete nicht nur am Startknoten, sondern über Gruppen von Startknoten hinweg berücksichtigt. Dazu wird jedem Startknoten n eine Synchronisationsgruppe G(n) in {1, 2, ..., Gmax} zugeordnet. Knoten, die der gleichen Synchronisationsgruppe g zugordnet werden, synchronisieren ihre Einspeisezyklen. Insbesondere wird davon ausgegangen, dass es einen kleinsten gemeinsamen Teiler z(g) aller Einspeisezyklen von Startknoten der Synchronisationsgruppe g gibt. Ohne Einschränkung wird zur vereinfachten Darstellung angenommen, dass alle Startknoten einer Gruppe den gleichen Einspeisezyklus haben (Z(n) = z(G(n))). (Knoten die ursprünglich
längere Einspeisezyklen hatten, verwenden dann einfach nicht alle dieser kürzeren Zyklen zur Einspeisung.) Die Synchronisationsmechanismen bewirken, dass der k-te Einspeisezyklus zweier Sendeknoten der gleichen Synchronisationsgruppe g, bis auf Synchronisationsunsicherheiten, gleichzeitig stattfindet und eine Dauer von z(g) hat.

Das beschriebene Übertragungsnetzwerk kann dazu verwendet werden, Datenströme zu bedienen, wobei ein Datenstrom aus einem oder mehrere Datenpaketen besteht. Die Menge aller Datenströme wird mit S bezeichnet. Jeder Strom s in S besitzt einen Startknoten SN(s) in N, an dem seine Pakete im Netzwerk eingespeist werden, und einen Zielknoten TN(s) in N, an dem sie es verlassen. Die Synchronisationsgruppe eines Stroms s in S ist G(s):= G(SN(s)), die Synchronisationsgruppe seines Startknotens. Es gib periodische Datenströme, d.h. die Einspeisung der einzelnen Datenpakete des Stroms in das Netzwerk geschieht mit einem festen zeitlichen Abstand t(s). Da die Einspeisungen zu Beginn eines Einspeisezyklus des Startknotens erfolgen ist dieser zeitliche Abstand t(s) der Einspeisezyklen zweier Pakete von s ein ganzzahliges Vielfaches von Z(SN(s)) = z(G(s)). Es sei T(g) das kleinste gemeinsame Vielfache aller t(s) Werte von Strömen s in S die G(s) = g erfüllen. Dies impliziert, dass sich nach einer Zeitdauer von T(g) die gleichen Einspeisungen wiederholen, d.h. die Einspeisungen von Datenpaketen einer Synchronisationsgruppe g laufen periodisch mit Periode T(g) ab. Ohne Einschränkung wird zur Vereinfachung der Darstellung angenommen, dass alle Ströme t(s) = T(G(s)) erfüllen. (Falls das für einen Strom s in S nicht der Fall ist, könnte dieser Strom s durch T(G(s))/t(s) Ströme mit Periode T(g) ersetzt werden, deren Einspeisungen um t(s) versetzt erfolgen.)

Die Zahl Psi(g) := T(g)/z(g) ist die Anzahl der Einspeisezyklen aller Startknoten die zur Synchronisationsgruppe g gehören innerhalb der Periode T(g). Jeder Strom s in S mit G(s) = g speist also ein Datenpaket in genau einem der ersten Psi(g) Einspeisezyklen des Startknotens SN(s) ein. Die Nummer dieses Einspeisezyklus wird mit phi(s) bezeichnet. Die Bestimmung geeigneter Einspeisezyklen phi(s) der Ströme s in S erfolgt üblicherweise so, dass jeder der Psi(g) Zyklen an den Einspeiseknoten der Synchronisationsgruppe g eine ähnliche Auslastung aufweist. Erfindungsgemäß wird die Verteilung der Datenpakete auf Einspeisezyklen innerhalb des Startknotens, und außerdem auch über alle Knoten derselben Synchronisationsgruppe, vorteilhaft berücksichtigt.

Jedem Datenstrom s in S wird eine Prioritätsstufe P(s) in {1, 2,..., Pmax} zugewiesen. s in S hat eine höhere Priorität als s' in S, wenn P(s) < P(s') gilt (niedrigere Prioritätsstufen bedeuten eine höhere Priorität). Innerhalb einer Prioritätsstufe werden wartende Pakete in der Reihenfolge ihrer Ankunftszeiten durch die nachfolgende Übertragungsstrecke weitergeleitet (FIFO). Wenn (Daten-)Pakete unterschiedlicher Prioritätsstufen an einer ausgehenden Übertragungsstrecke um ihre Weiterleitung konkurrieren, werden die mit höherer Priorität zuerst weitergeleitet. Eine laufende Weiterleitung kann unter Umständen unterbrochen werde, um höherpriore Pakete zu bedienen und danach die unterbrochene Weiterleitung fortzusetzen.

Für jede Priorität p in {1, 2, ..., Pmax} und Übertragungsstrecke v in V wird eine Vorlaufszeit tau(p,v) bestimmt, die die maximale Dauer zwischen dem Zeitpunkt, an dem ein Paket eines Stroms mit Priorität p am Eingang der Übertragungsstreck v ankommt bis ein Paket mit dieser oder höherer Priorität die Übertragungsstrecke v belegt, darstellt. Wenn die Übertragungsstrecke bei der Ankunft gerade mit der Abarbeitung eines Pakets mit dieser oder einer höheren Priorität beschäftigt ist, so ist diese Zeit 0. Die Vorlaufszeit kann beispielsweise abbilden, dass die Abarbeitung eines Datenpakets hoher Priorität erst nach der Beendigung der kompletten Abarbeitung eines Pakets einer niedrigeren Prioritätsstufe beginnt, indem sie auf die Dauer der längsten Abarbeitungszeit aller Pakete mit niedrigerer Priorität gesetzt wird, die diese Übertragungsstrecke durchlaufen könnten. Im Falle, dass ein Paket mit einer gegebenen Priorität die Abarbeitung eines Pakets mit einer niedrigeren Priorität unterbrechen kann, würde man die Vorlaufszeit entsprechend kleiner wählen, z.B. auf die Zeit, die es braucht, um diese Unterbrechung einzuleiten.

Alle Pakete eines Stroms s in S durchlaufen dieselben Übertragungsstrecken auf dem Weg vom Start- zum Zielknoten. Die Zahl h = H(s) bestimmt die Anzahl der durchlaufenen Übertragungsstrecken, und eine solche Anzahl von Übertragungsstrecken r_1(s), r_2(s), ... r_h(s) in V, beschreiben den Übertragungs-pfad der Datenpakete vom Startknoten zum Zielknoten. Dieser Pfad r(s) = (r_1(s), r_2(s), ... r_h(s)) ist dann in dem Sinne sinnvoll, wenn
- er im Startknoten von s startet (i.E. in(r_1(s)) = SN(s))
- aufeinanderfolgende Übertragungsstrecken durch einen gemeinsamen Knoten führen (out(r_1(s)) = in(r_2(s)), ..., out(r_h-1(s)) = in(r_h(s)))
- kein Knoten im Pfad zweimal durchlaufen wird (|{SN(s), out(r_1(s)), ..., out(r_h(s))}| = H(s)+1)
- er im Zielknoten von s endet (i.E. out(r_h(s)) = TN(s)).

Solche Pfade werden üblicherweise mit Hilfe eines Dijkstra Algorithmus so gebildet, dass sie möglichst kurz hinsichtlich ihrer geometrischen Länge oder Durchlaufzeit sind, eine möglichst niedrige Auslastung aufweisen, oder eine Kombination dieser Größen minimieren.

Für jeden Strom s in S und Übertragungsstrecke v im Pfad r(s) des Stroms s wird eine Belegungszeit sigma(s,v) bestimmt. Diese Dauer stellt eine möglichst kleine obere Schranke dafür dar, wie lange die Übertragungsstrecke v durch die Übertragung eines Pakets von s belegt ist. Diese Belegungszeit fasst mehrere physikalische Eigenschaften bzw. Werte zusammen:
Geschwindigkeit der Übertragungsstrecke v, maximale Größe eines Pakets von s, Längen von Preambeln, Anhängen und Lücken von Paketen, die bei der Übertragung die Übertragungsstrecke zusätzlich belegen können. Falls die Übertragung von Paketen durch die Übertragung anderer (z.B. höherpriorer) Pakete unterbrochen werden kann, so würde die Belegzeit die Summe der Dauern der Übertragung der Teilpakete darstellen.

Für zwei Ströme s, s' in S können aus ihren Belegungszeiten und Pfaden maximale Verzögerungswerte gebildet werden. Die maximale Verzögerung, die ein Paket vom Strom s' auf ein Paket des Stroms s innerhalb ihrer Durchläufe durch das Netzwerk (theoretisch) bewirken könnte, wird mit w(s,s') bezeichnet. Die Bestimmung dieser Werte geschieht folgendermaßen:
- Es werden alle gemeinsamen Segmente der Pfade r(s) und r(s') gefunden. Gemeinsame Segmente sind größtanzahlige aufeinanderfolgende Übertragungsstrecken, die in beiden Pfaden vorkommen.
- Für jedes dieser gemeinsamen Segmente C = (u_1, u 2, ..., u_m) wird der Wert B(s',C) als Maximum der Belegungszeiten sigma(s',u_1), ..., sigma(s',u_m) des Stroms s' auf einer dieser Übertragungsstrecken u_1, ..., u_m des Segments C bestimmt.
- w(s,s') gilt als Summe der B(s',C)-Werte über alle gemeinsamen Segmente ihrer Pfade.

Der Wert w(s,s') stellt eine obere Schranke für die Verzögerung eines Pakets des Stroms s durch ein Paket des Stroms s' zwischen Einspeisung und Zielerreichung dar. Die Maximumsbildung in dieser Berechnung berücksichtigt, dass die Abarbeitungsreihenfolge an den Eingängen der Übertragungsstrecken, die durch Prioritäten und gemäß der Ankunftszeitpunkte innerhalb einer Prioritätsstufe bestimmt sind, dafür sorgen, dass ein konkurrierendes Datenpaket innerhalb eines Segments in Summe nur zu so viel Verzögerung führen kann, die der längsten Belegzeit im Segment entspricht.

Für jeden Strom s in S und Übertragungsstrecke v im Pfad r(s) des Stroms s wird eine Transportzeit lambda(s,v) bestimmt. Sie ist eine möglichst kleine obere Schranke für die Dauer zwischen dem Ende der Belegung der Übertragungsstrecke v durch ein Paket von s bis zur Ankunft dieses Pakets an der darauffolgenden Übertragungsstrecke bzw. am Ziel, falls v die letzte Übertragungsstrecke im Pfad ist. Die Transportzeit hängt von verschiedenen Parametern des Systems ab, z.B. von der Länge der Übertragungsstrecke, Größe der Pakete, der Dauern der Weiterleitung innerhalb des nächsten Knoten. Diese Zeit kann negativ sein, z.B. wenn ein Knoten in der Lage ist, ein ankommendes Paket schon vor dem Ende der Belegzeit an der vorigen Übertragungsstrecke weiterzuleiten.

Die Vorlaufzeiten und Transportzeiten in den Übertragungsstrecken werden dazu genutzt, um für jeden Strom s in S eine obere Schranke e(s) für die Gesamttransportzeit entlang des Pfades von s zu bilden:
- Für jede Priorität p und jedes Paar von Übertragungsstrecke v, v' in V, die durch einen gemeinsamen Knoten gehen (i.e. out(v) = in(v')), bilden wir die Menge aller Ströme S(p,v,v') := {s in S: P(s) <= p und v, v' in r(s)}, die eine Priorität höher gleich p und einen Pfad durch v und v' besitzen.
- Dann wird der Wert d(p,v,v') als Maximum der Summe aus Belegungs- und Transportzeit sigma(s',v) + lambda(s',v) aller Datenpakete von Strömen s' in S(p,v,v') bestimmt. D.h. d(p,v,v') := max {sigma(s',v) + lambda(s',v): s' in S(p,v,v')}.
- Schließlich wird h = H(s) gesetzt und die Summe e(s) = sum_{i<h} (tau(P(s),r_i(s)) + d(P(s),r_i(s),r_i+1(s))) + tau(P(s),r_h(s) + sigma(s, r_h(s) + lambda(s, r_h(s)) berechnet.

Der Wert e(s) ist eine obere Schranke für die Summe fixer Dauern die die Ankunft eines Pakets am Ziel verzögern können. "Fix" bedeutet hierbei, dass sie nicht vom Timing der Ströme abhängt.

Für jeden Strom s in S gibt es die Vorgabe einer maximal erlaubten Latenz L(s). Das bedeutet, dass zwischen dem Einspeisezeitpunkteines Datenpakets des Datenstroms s am Sendeknoten SN(s) bis zum Verlassen des Netzwerks am Zielknoten TN(s) höchstens die Zeit L(s) vergehen darf. Ströme s ohne Latenzanforderung können durch eine Latenz L(s) mit dem Wert unendlich dargestellt werden.

Im Folgenden sei S(g,p) die Menge aller Ströme, die zur Synchronisationsgruppe g gehören und die gleiche oder eine höhere Priorität wie p haben. Die Abbildung floor(x) bestimmt die größte ganze Zahl, die kleiner oder gleich der Zahl x ist und ceil(x) die kleinste ganze Zahl, die größer oder gleich der Zahl x ist.

Für jeden Strom s in S wird die Variable theta(s) eingeführt, die die maximale Durchlaufzeit eines Pakets von s im Netzwerk darstellen soll. Der folgende Ablauf berechnet für einen Strom s eine neue maximale Durchlaufszeiten Theta(s) und wird, als "Durchlaufszeitupdate" für s bezeichnet:
- Für s' in S(G(s),P(s)) wird die maximale Anzahl alpha(s,s') der möglicherweise ein Paket von s störenden Pakete von s' bestimmt durch
alpha(s,s') := floor((theta(s) + a - a')/A) + ceil((theta(s') - a + a')/A).

Dabei wird zur Verkürzung A = T(SN(s)) und a = phi(s) z(SN(s)) = phi(s) z(SN(s')) und a' = phi(s') z(SN(s')) verwendet.

Die Summe w(s,s') alpha(s,s') über alle Ströme s' in S(G(s),P(s)) wird berechnet und diese Summe mit X(s) bezeichnet. D.h. X(s) := sum_{s' in S(G(s),P(s))} w(s,s') alpha(s,s'). Somit ist X(s) eine obere Schanke für die maximale Wartezeit eines Pakets von s wegen Paketen, die in mit s synchronisierten Knoten starten.

Für g ungleich G(s), psi in {1, 2, ..., Psi(g)} und s' in S(g,P(s)) wird die maximale Anzahl beta(psi,s,s') der möglicherweise ein Paket von s störenden Pakete von s' durch
beta(psi,s,s') := floor((b - b')/B) + ceil((theta(s) + theta(s') - b + b')/B) berechnet.

Dabei wird zur Verkürzung B = T(SN(s')), b = psi z(SN(s')) und b' = phi(s') z(SN(s')) gesetzt.
- Für jede Gruppe g ungleich G(s) und psi in {1, 2, ..., Psi(g)} wird die Summe von w(s,s') beta(psi,s,s') für s' in S(g,P(s)) berechnet. Dann wird das Maximum dieser Werte über psi in {1, 2, ... Psi(g)} bestimmt und dieses Maximum der Summen mit Y(g,s) bezeichnet. Somit ist Y(g,s)eine obere Schranke für die maximale Wartezeit eines Pakets von s wegen Paketen, die in Knoten der Synchchronisierungsgruppe g starten.
- Theta(s) wird als Summe von e(s), X(s) und den Werten Y(g,s) für g ungleich G(s) erhalten.

Unter der Annahme, dass die Durchlaufszeitupdates Theta(s) für alle Ströme s in S die Ungleichung Theta(s) <= theta(s) erfüllen, dauert für jeden Strom s in S der Durchlauf eines Pakets des Stroms s durch das Netzwerk höchstens Theta(s).

Das vorzugsweise computer-implementierte Verfahren zur Entscheidung, ob alle Pakete einer Menge von Strömen S unter Einhaltung ihrer Latenzen L(s) durch das Netzwerk laufen können, weist erfindungsgemäß folgende Schritte auf:
1. Bildung initialer Durchlaufszeiten, indem für jeden Strom s in S theta(s):= 0 gesetzt wird.
2. Berechnung der Durchlaufszeitupdates Theta(s) für jeden Strom s in S aus den Durchlaufzeitwerten theta(s).
3. Wenn einer der Werte Theta(s) > L(s) erfüllt, so bricht/wird das Verfahren mit "Einhaltung der geforderten Latenzen konnte mit dem Verfahren nicht nachgewiesen werden" ab bzw. mit "ablehnen" beendet.
4. Wenn Theta(s) <= theta(s) für alle s in S erfüllt ist, so bricht/wird das Verfahren mit "Alle Ströme können ihre geforderten Latenzen einhalten" ab bzw. mit "akzeptieren" beendet.
5. Wenn keines der Kriterien in 3. und 4. erfüllt ist, wird theta(s) für s in S durch den Wert Theta(s) ersetzt und es wird mit Punkt 2. fortgefahren.

Es kann gezeigt werden, dass das Verfahren nach endlich vielen Schritten in Schritt 3 oder 4 endet.

Je nach Ergebnis "akzeptieren" bzw. "ablehnen" des Verfahrens, können Varianten der Datenströme (andere Einspeisezyklen, andere Pfade, ...) mit dem oder alternativen Verfahren untersucht werden und die geeignetste Variante von akzeptierten Datenströmen tatsächlich übertragen werden.

Es werden nichtnegative Zahlen a, a', theta, theta' und die Zahl A, die positiv sein soll, betrachtet. Die Anzahl der (periodischen) Intervalle [a', a' + theta'), [a' + A, a' + theta' + A), ..., die mit dem Intervall [a, a + theta) überlappen, wird durch den Ausdruck floor((theta + a - a')/A) + ceil((theta' - a + a')/A) nach oben beschränkt. Dies und das eine Belegung einer Übertragungsstrecke durch ein Datenpaket in dem Zeitraum zwischen Einspeisung und Verlassen des Netzwerks stattfindet, ist eine zugrundeliegende Motivation der Definition von alpha(s,s') im Verfahren. Zu dem Wert beta(psi,s,s') ist auch eine Interpretation als obere Schranke von Intervallüberlappungen möglich. Eine Weiterbildung der Erfindung ist, die Einspeisungsreihenfolgen zu gestalten: Die Menge aller Ströme, die an Übertragungsstrecke v in V im Einspeisezyklus psi in {1, ..., Psi(g)} einspeisen wird mit S(v,psi) := {s in S: SN(s) = v und phi(s) = psi} bezeichnet. Im obigen Verfahren ist offengelassen, in welcher Reihenfolge die Pakete dieser Ströme, die zu einer Prioritätsstufe gehören in dem Einspeisezyklus an der ersten Übertragungsstrecke abgearbeitet werden. Falls bestimmte Reihenfolgen der Einspeisung im Sendeknoten realisiert werden, könnten die berechneten maximalen Durchlaufzeiten entsprechend verkleinert werden.

Eine Weiterbildung der Erfindung dient der Verbesserung von Synchronisierungsungenauigkeiten: Eine ungenaue Synchronisierung der Einspeisezyklen eines Sendeknotens n in N kann durch eine entsprechende Erhöhung der e(s) Werte aller Ströme s in S, die n als Startknoten nutzen (d.h. SN(s) = n erfüllen) berücksichtigt werden. Diese Erhöhung entspricht dabei der maximal möglichen zeitlichen Verschiebung des Starts der Einspeisezyklen im Vergleich mit anderen Knoten n' in N aus der gleichen Synchronisationsgruppe (d.h. mit G(n') = G(n)).

Eine Weiterbildung der Erfindung dient der Reduktion des Rechenaufwandes:
Es kann oft ausreichend sein, folgendermaßen für die Einhaltung der Latenzen zu sorgen:
Die Startwerte werden theta(s) = L(s) (anstatt 0 wie oben unter 1.) gesetzt und die Durchlaufzeitupdates Theta(s) für alle Ströme berechnet. Wenn nun Theta(s) <= L(s) für alle Ströme s in S gilt, so werden alle Latenzgrenzen eingehalten.

Prioritätsweise Berechnungen: Da die maximalen Durchlaufszeiten theta(s) von Strömen s in S nicht von den theta(s') Werten von Strömen s' in S mit P(s') > P(s) abhängen, kann der Rechenaufwand des Verfahrens verkleinert werden, indem das Verfahren in der Reihenfolge der Prioritätsstufen durchlaufen wird. D.h. zuerst werden die theta(s) Werte für alle Ströme s in S mit P(s) = 1, dann mit P(s) = 2, ..., usw. bis P(s) = Pmax berechnet.

Start mit vorigen theta-Werten: Falls Ströme neu hinzugekommen sind und zuvor berechnete theta-Werte der vorigen Ströme bekannt sind, können diese als Startwerte im Schritt 1. des obigen Verfahrens dienen. Dies kann die Anzahl der Durchläufe von Schritt 2. reduzieren. Insbesondere kann in Schritt 1. größere Startwerte für die theta-Variablen wählen werden, z.B. theta(s) = e(s), um evtl. Rechenaufwand zu reduzieren.

Mischung mit anderen Verfahren: Falls für eine Teilmenge S' der Menge aller Ströme S schon Durchlaufzeitschanken theta(s) bekannt sind, kann man das obige Verfahren auf die Ströme s in S, die kein Element von S' sind, einschränken. Die theta(s) Werte für s in S' werden also nicht neu berechnet und nicht verändert, können aber Verwendung in den übrigen Schritten finden. In diesem Fall liefert das Verfahren entweder einen Nachweis, dass die übrigen Ströme ihre Latenzbeschränkungen einhalten, oder ob das Verfahren ungeeignet für einen solchen Nachweis ist.

Als Weiterbildung des erfindungsgemäßen Verfahrens gibt es keine Pufferüberläufe. Das Verfahren benutzt dabei vorab ermittelte maximale Durchlaufszeiten theta(s) für jeden betrachteten Strom s in S.

Es sei B eine Menge von Puffern in den Knoten des Netzwerks, in denen Datenpakete von Strömen gespeichert werden können. Es sei M(b) für b in B die Größe des Puffers b und fl(s) die maximale Größe eines Datenpakets des Stroms s. Ferner sei S b die Teilmenge von Strömen aus S, die, wenn nötig, im Puffer b gespeichert werden können. Strom s wird seine Pakete im Einspeisezyklus phi(s) einspeisen und eine Durchlaufszeit von höchstens theta(s) haben.

Die Erfindung wird mit einem Verfahren vorteilhaft erweitert, das eine obere Schranke U(b) für den möglichen Füllstand des Puffers b berechnet:
1. Zunächst wird für jede Synchronisationsgruppe g in {G(s): s in S_b} und jede Phase i in {1, ..., Phi(g)} der Wert U(b,g,i) als Summe der Paketlängen fl(s) von Strömen s berechnet, die den Bedingungen s in S_b, G(s) = g und phi(s) <= psi < phi(s) + theta(s)/z(g) genügen.
2. Daraus wird der Wert U(b,g) als Maximum der Werte {U(b,g,1), U(b,g,2), ..., U(b,g,Phi(g))} bestimmt.
3. Schließlich wird U(b) als Summe der Werte U(b,g) für g in {G(s): s in S_b} berechnet.

Ein Pufferüberlauf von Puffer b in B kann ausgeschlossen werden, wenn U(b) <= M(b) gilt. Andernfalls ist das beschriebene Verfahren nicht geeignet diesen Nachweis zu führen. Indem nur Ströme im System akzeptiert werden, für die U(b) <= M(b) für alle Puffer b, die überlaufen können, gilt, kann sichergestellt werden, dass es zu keinen der betrachteten Überläufe im Betrieb des Netzwerks kommt.

Der Vorteil bei diesem Verfahren liegt in der Reduktion auf ein Maximum endlich vieler Werte in Schritt 2. und in der Handhabung unsynchronisierter Gruppen von Strömen in Punkt 3. Umgekehrt nutzt das Verfahren die Verteilung der Einspeisung auf synchronisierte Einspeisezyklen in Schritt 1. aus, um kleinere Schranken für den Pufferfüllstand zu erhalten als ohne diese Information.

Die beschriebene Vorgehensweise umfasst den Spezialfall von dedizierten Puffern für jede Prioritätsstufe vor allen Übertragungstrecken: Hier ist B = {(v,p): v in V und p = P(s) für ein s in S} und für (v,p) in B wird S_(v,p) := {s in S: v in r(s) und P(s) = p} gesetzt. D.h. Datenpakete von Strömen, die die Übertragungsstrecke v durchlaufen und die Prioritätsstufe p besitzen, werden im Puffer (v,p) zwischengespeichert, wenn nötig.

In Bezug auf die Figur wird eine Ausführungsform eines (Übertragungs-)Netzwerks 10 dargestellt. Das Netzwerk 10 weist im folgenden Ausführungsbeispiel zumindest eine elektronische Recheneinrichtung 12 auf. Die elektronische Recheneinrichtung 12 ist dabei zum Ausführen eines entsprechenden nachfolgenden Verfahrens ausgebildet. Im Beispiel kann das Übertragungsnetzwerk drahtgebunden und/oder drahtlos ausgebildet sein kann. Hierbei ist die Verwendung von Kommunikationsstandards wie Mobilfunk (z.B. LTE, 5G etc.), WIFI, LAN und ein Intra- bzw. Internet denkbar.

Gemäß einer Ausführungsform des Verfahrens ist vorgesehen, dass das Netzwerk 10 mit zumindest einem Sendeknoten mit potenziell zu sendendem Datenstrom 20 aus einer Menge S von Datenströmen, einem Zwischenknoten 14 und einem Endknoten 16 bereitgestellt wird, wobei eine Teilmenge von Sendeknoten, die synchronisiert werden, eine erste Synchronisationsgruppe bilden. Es wird für jeden Datenstrom aus der Menge S eine maximale Verzögerung bzw. Wartezeit eines Datenpakets des Datenstroms in Abhängigkeit von bereits akzeptierten Datenströmen von Störern 24, deren Sendeknoten einer Synchronisationsgruppe zugeordnet sind, und von Störern 26, deren Sendeknoten einer anderen Synchronisationsgruppe zugeordnet sind, am Zwischenknoten 14 mittels der elektronischen Recheneinrichtung 12 bestimmt. Es erfolgt das Bestimmen einer neuen maximalen Durchlaufzeit 28 des potenziell zu sendenden Datenstroms 20 in Abhängigkeit von einer initialen oder schon zuvor berechneten maximalen Durchlaufzeit und in Abhängigkeit von der berechneten maximalen Wartezeit durch die genannten Störer mittels der elektronischen Recheneinrichtung 12. Es wird dann entschieden, ob der potenziell zu sendende Datenstrom 20 am Sendeknoten eingespeist wird in Abhängigkeit davon, ob die oben bestimmten maximalen Durchlaufzeiten je eine einzuhaltende Latenzzeit unterschreiten oder gleich dieser sind. In der Figur wird insbesondere dargestellt, dass lediglich ein Zwischenknoten 14 vorgesehen sein kann. Es kann jedoch auch vorgesehen sein, dass das Netzwerk 10 mit zumindest zwei Zwischenknoten 14 bereitgestellt wird und die Durchlaufzeiten in Abhängigkeit von jeweiligen maximalen Wartezeiten durch Störer der zumindest zwei Zwischenknoten 14 bestimmt wird.

Des Weiteren kann vorgesehen sein, dass die Entscheidung zum Senden in Abhängigkeit von einer vorgegebenen Prioritätsstufe für den potenziell zu sendenden Datenstrom 20 gefällt wird.

Des Weiteren kann vorgesehen sein, dass ein solcher Zwischenknoten 14 oder die zumindest zwei Zwischenknoten 14 jeweils einen nicht dargestellten Puffer für Datenpakete aufweisen. Es kann dann für zumindest eine Teilmenge von Datenströmen aus der Menge S, deren Datenpakete in dem genannten Puffer gespeichert werden, eine obere Schranke für den Füllstand des Puffers aus der Summe der für jede Synchronisationsgruppe maximalen Werte von über jede Phase eines Einspeisezyklus aufsummierten Paketlängen von Datenströmen aus der Teilmenge berechnet wird. Diese obere Schranke muss dann unter oder gleich der Größe des Puffers liegen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der Netzwerkbetriebsverfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Verfahrensschritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen oder zentralen Speichern abgelegt sein, es ist aber auch möglich, die Instruktionen auf einem entfernten System abzulegen und darauf via Netzwerk zuzugreifen.

Der Begriff "Prozessor", "zentrale Signalverarbeitung", "Recheneinheit", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Einrichtungen bzw. Einheiten bestehen, die in eine Vorrichtung integriert sein können. Besteht ein Prozessor aus mehreren Einrichtungen, können diese zur parallelen oder sequentiellen Verarbeitung bzw. Ausführung von Instruktionen ausgelegt bzw. konfiguriert sein

## Patentansprüche

1. Computerimplementiertes Verfahren zur Kontrolle eines Einspeisens von Datenpaketen eines Datenstroms s einer Menge S von Datenströmen in ein Übertragungsnetzwerk (10), wobei das Übertragungsnetzwerk mehrere Knoten n sowie wenigstens eine Übertragungsstrecke v von Eingangsknoten in(v) zu Ausgangsknoten out(v) umfasst, wobei jede Übertragungsstrecke gemeinsam von einem oder mehreren Datenströme gemeinsam genutzt werden kann, wobei das Einspeisen von Datenpaketen an einem Sendeknoten in Einspeisezyklen unterteilt sind, die eine vorgegebene zeitliche Dauer Z(n) aufweisen, wobei die Sendeknoten einer Synchronisationsgruppe G(n) zugeordnet werden und die Sendeknoten derselben Synchronisationsgruppe ihre Einspeisezyklen periodisch mit einer Periode T(g) synchronisieren, wobei das Verfahren mit folgenden Schritten kontrolliert, ob alle Datenpakete der Menge der Datenströme unter Einhaltung ihrer jeweiligen Latenzzeit L(s) von ihren Sendeknoten in das Übertragungsnetz eingespeist werden können:
a) Bilden initialer maximaler Durchlaufzeiten theta(s) eines Datenpakets von jedem Datenstrom s aus der Menge S der Datenströme im Übertragungsnetzwerk,
b) Ermitteln von neuen maximalen Durchlaufzeiten (28) Theta(s) für jeden Datenstrom s in S aus den vorhergehenden maximalen Durchlaufzeiten theta(s), wobei Theta(s) aus der Summe einer oberen Schranke für die Summe fixer Dauern, die die Ankunft eines Datenpakets an einem Endknoten aufgrund physikalischer Eigenschaften der vom Datenpaket genutzten Übertragungsstrecke verzögern können, einer oberen Schranke für eine maximale Wartezeit eines Datenpakets des Datenstroms s durch Belegung einer oder mehrerer gemeinsam genutzter Übertragungsstrecken durch andere Datenpakete s', die an mit s synchronisierten Sendeknoten eingespeist werden und einer Summe oberer Schranken für jede maximale Wartezeit eines Datenpakets des Datenstroms s durch Belegung einer oder mehrerer gemeinsam genutzter Übertragungsstrecken durch andere Datenpakete s', die an Sendeknoten, die zu einer anderen Synchronisationsgruppe als die der mit s synchronisierte Sendeknoten zugeordnet werden, eingespeist werden, berechnet wird,
c) wenn einer der ermittelten Werte von Theta(s) die einzuhaltende Latenzzeit L(s) überschreitet, so wird das Verfahren mit dem Ergebnis "ablehnen" beendet,
d) wenn alle ermittelten Werte von Theta(s) den jeweils vorigen maximalen Durchlaufzeiten theta(s) gleich sind oder diese unterschreiten, dann wird das Verfahren mit dem Ergebnis "akzeptieren" beendet,
e) ansonsten werden die Werte der maximalen Durchlaufzeiten theta(s) jeweils auf die Werte von Theta(s) gesetzt und beginnend mit obigen Schritt b) das Verfahren wiederholt.

2. Verfahren nach dem vorhergehenden Anspruch, **dadurch gekennzeichnet, dass** die Datenströme einer Menge S jeweils unterschiedliche Prioritätsstufen aufweisen.

3. Verfahren nach dem vorhergehenden Anspruch, **dadurch gekennzeichnet, dass** das Ermitteln von neuen Durchlaufzeiten Theta(s) für jeden Datenstrom s in S in der Reihenfolge der jeweiligen Prioritätsstufen der Datenströme durchgeführt wird.

4. Verfahren nach einem der vorhergehenden Ansprüche, **dadurch gekennzeichnet, dass** für mindestens eine Teilmenge von Datenströmen aus S, deren Datenpakete in einem Puffer b aus einer Menge B von Puffern in den Knoten gespeichert werden können, eine obere Schranke U(b) für einen Füllstand des Puffers aus der Summe der für jede Synchronisationsgruppe maximalen Werte von über jede Phase eines Einspeisezyklus aufsummierten Paketlängen von Datenströmen aus der Teilmenge berechnet wird und die berechnete obere Schranke der Größe M(b) eines Puffers entspricht oder die Größe M(b) unterschreitet.

5. Verfahren nach einem der vorhergehenden Ansprüche, **dadurch gekennzeichnet, dass** Datenpakete von Datenströmen, die eine Übertragungsstrecke v durchlaufen und eine Prioritätsstufe aufweisen, in einem für die Übertragungstrecke v und für die Prioritätsstufe dezidierten Puffer gespeichert werden.

6. Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach einem der vorhergehenden Ansprüche durchzuführen.

7. Computerlesbares Speichermedium mit zumindest einem Computerprogrammprodukt nach dem vorhergehenden Anspruch.

8. Elektronische Recheneinrichtung (12) für ein Übertragungsnetzwerk (10), wobei die elektronische Recheneinrichtung zur Durchführung des Verfahrens nach einem der vorhergehenden Verfahrensansprüche ausgebildet ist.
